(19) **Europäisches Patentamt** / **European Patent Office** / **Office européen des brevets**

(11) **EP 2 819 856 B1**

(12) **FASCICULE DE BREVET EUROPEEN**

(45) Date de publication et mention de la délivrance du brevet:
**27.04.2016 Bulletin 2016/17**

(21) Numéro de dépôt: **13708369.7**

(22) Date de dépôt: **21.02.2013**

(51) Int Cl.:
**B60C 9/28** *(2006.01)*      **B60C 15/06** *(2006.01)*

(86) Numéro de dépôt international:
**PCT/EP2013/053405**

(87) Numéro de publication internationale:
**WO 2013/127680 (06.09.2013 Gazette 2013/36)**

(54) **ASSEMBLAGE D'UN PNEUMATIQUE AYANT UN BOURRELET PERFECTIONNÉ ET UNE D'UNE JANTE DE MONTAGE**

REIFENANORDNUNG MIT VERBESSERTEM WULST UND MONTAGEFELGE

TYRE ASSEMBLY HAVING AN IMPROVED BEAD AND A MOUNTING RIM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.02.2012 FR 1251787**

(43) Date de publication de la demande:
**07.01.2015 Bulletin 2015/02**

(73) Titulaires:
- **Compagnie Générale des Etablissements Michelin**
  **63000 Clermont-Ferrand (FR)**
- **MICHELIN Recherche et Technique S.A.**
  **1763 Granges-Paccot (CH)**

(72) Inventeur: **BOURGEOIS, Frédéric**
**63040 Clermont-Ferrand Cedex 9 (FR)**

(74) Mandataire: **Bauvir, Jacques**
**M.F.P. Michelin**
**SGD/LG/PI - F35 - Ladoux**
**23, place des Carmes Déchaux**
**63040 Clermont-Ferrand Cedex 09 (FR)**

(56) Documents cités:
**WO-A2-2011/067211**

**EP 2 819 856 B1**

**Description**

DOMAINE DE L'INVENTION

La présente invention concerne les pneumatiques pour véhicules de tourisme, et notamment les bourrelets de ces pneumatiques.

ARRIERE-PLAN

La réduction des émissions de gaz à effet de serre des transports est un des défis majeurs devant lequel se trouvent les manufacturiers de véhicules aujourd'hui. Le pneumatique constitue une source importante de progrès, par le biais d'un abaissement de la résistance au roulement, car celle-ci a un impact direct sur la consommation de carburant du véhicule. Des avancées notables ont été obtenues, comme en témoigne par exemple le grand succès du pneumatique Energy™ Saver commercialisé depuis peu par Michelin. La technologie mise en oeuvre permet d'économiser près de 0,2 l de carburant aux 100 km en cycle mixte, soit une réduction de près de 4 g de $CO_2$ au km. Ceci correspond à environ une tonne de $CO_2$ non rejetée dans l'atmosphère durant la vie d'un véhicule.

Compte tenu de l'augmentation prévisible du prix du pétrole et de la conscience écologique toujours grandissante des consommateurs, il est néanmoins nécessaire de poursuivre les efforts visant à réduire la résistance au roulement des pneumatiques.

L'ensemble formé par le bourrelet et la partie radialement intérieure du flanc d'un pneumatique fait partie des composantes du pneumatique dont la structure a une répercussion très nette sur la résistance au roulement du pneumatique. Son rôle est multiple : il reprend les tensions de l'armature de carcasse et transmet les efforts subis par le pneumatique du flanc vers la jante. Il assure donc le guidage du sommet du pneumatique à partir de la jante. Son influence sur la tenue de route du pneumatique est considérable, surtout lorsque le pneumatique est fortement chargé. L'ensemble de ces fonctions est habituellement assuré par l'association d'une armature (comprenant la tringle et le retournement de l'armature de carcasse autour de celle-ci) et d'un « bourrage » en composition caoutchouteuse. Le compromis entre la rigidité à atteindre, en particulier pour le guidage du sommet, et l'endurance attendue conduit généralement à prévoir une certaine trajectoire de l'armature de carcasse et à utiliser un bourrage volumineux (haut et/ou épais) et rigide. La contrepartie de cette géométrie est une perte hystérétique importante, notamment au niveau du bourrage. L'action rigidifiante du bourrage s'exerce surtout dans la zone éloignée du bourrelet et nécessite donc un bourrage d'autant plus volumineux et, par conséquent, une perte hystérétique encore plus importante.

A la recherche d'un pneumatique pour véhicules de tourisme ayant une très basse résistance au roulement, la demanderesse a proposé un pneumatique dans lequel le volume du bourrage a été réduit autant que possible et dans lequel la fonction de rigidification est assurée par armature très faiblement hystérétique. Un tel pneumatique est divulgué dans le document WO 2011/067211.

Ce pneumatique, s'il permet d'obtenir un excellent compromis entre résistance au roulement et rigidité de dérive, n'a pas été à la hauteur des espérances du point de vue de l'endurance.

RESUME DE L'INVENTION

Un des objectifs de la présente invention est de fournir un pneumatique pour véhicules de tourisme ayant une très basse résistance au roulement associée à une bonne endurance.

Cet objectif est atteint en réduisant autant que possible la mise en compression des éléments de renforcement métalliques ainsi que le cisaillement subis par la composition caoutchouteuse disposée à proximité de ces éléments de renforcements.

Plus précisément, cet objectif est atteint par un assemblage comprenant un pneumatique et une jante de montage appropriée, le pneumatique comportant :

deux bourrelets destinés à entrer en contact avec la jante de montage, chaque bourrelet comportant au moins une structure annulaire de renforcement, chaque structure annulaire de renforcement ayant un point axialement le plus à l'intérieur, les deux structures annulaires de renforcement définissant un plan médian du pneumatique, perpendiculaire à l'axe de rotation du pneumatique et situé à équidistance des structures annulaires de renforcement de chaque bourrelet ;

deux flancs prolongeant les bourrelets radialement vers l'extérieur, les deux flancs s'unissant dans un sommet comprenant une armature de sommet comportant deux nappes comportant chacune des éléments de renforcement et étant en contact l'une avec l'autre sur une partie du moins de la largeur du sommet, cette partie s'étendant de part et d'autre du plan médian du pneumatique, entre deux extrémités de contact, l'armature de sommet étant surmontée d'une bande de roulement ;

au moins une armature de carcasse s'étendant depuis les bourrelets à travers les flancs jusqu'au sommet, l'armature de carcasse comportant une pluralité d'éléments de renforcement de carcasse et étant ancrée dans les deux bourrelets par un retournement autour de la structure annulaire de renforcement, de manière à former dans chaque bourrelet un brin aller et un brin retour, chaque brin retour s'étendant radialement à l'extérieur jusqu'à une extrémité située à une distance radiale DRE du point radialement le plus à l'intérieur de la structure annulaire de renforcement du bourrelet, la distance radiale DRE étant supérieure ou égale à 5 % et inférieure ou égale à 20 % de la hauteur radiale H du pneumatique.

Chaque bourrelet comporte un bourrage formé d'une composition caoutchouteuse, le bourrage étant situé, au moins partiellement, radialement à l'extérieur de la structure annulaire de renforcement et au moins partiellement entre le brin aller et le brin retour de l'armature de carcasse, le bourrage s'étendant radialement jusqu'à une distance radiale DBE du point radialement le plus à l'intérieur de la structure annulaire de renforcement du bourrelet, la distance radiale DBE étant inférieure ou égale à 10 % de la hauteur radiale H du pneumatique.

Au moins un flanc du pneumatique comporte en outre une armature de rigidification ayant une extrémité radialement intérieure et une extrémité radialement extérieure, l'armature de rigidification étant formée d'une pluralité d'éléments de renforcement métalliques orientés selon un angle inférieur ou égal à 10 degrés par rapport à la direction circonférentielle, cette armature de rigidification étant disposée de telle sorte que la distance DAE entre le point radialement le plus à l'intérieur de la structure annulaire de renforcement et l'extrémité radialement extérieure de l'armature de rigidification est supérieure ou égale à 20 % et inférieure ou égale à 40 % de la hauteur radiale H du pneumatique et que la distance DAI entre le point radialement le plus à l'intérieur de la structure annulaire de renforcement et l'extrémité radialement intérieure de l'armature de rigidification est supérieure ou égale à 5 % et inférieure ou égale à 15 % de la hauteur radiale H du pneumatique.

Une portion de composition caoutchouteuse est disposée axialement à l'extérieur de l'armature de rigidification, l'épaisseur E2 de cette portion de composition caoutchouteuse, mesurée perpendiculairement à l'armature de rigidification, est supérieure ou égale à 1.2 mm en tout point.

Dans le pneumatique d'un assemblage selon l'invention, le ratio D2/D1 est supérieur ou égal à 1, où D1 désigne la distance axiale entre chaque extrémité de contact et le plan médian du pneumatique et D2 est la distance axiale entre le point axialement le plus à l'intérieur de la structure annulaire de renforcement et le plan médian du pneumatique, les distances D1 et D2 étant mesurées lorsque le pneumatique est monté sur la jante de montage et gonflé à une pression de service. Les « extrémités de contact » sont déterminées comme suit. On se place sur le plan médian du pneumatique et on suit l'armature de sommet en s'éloignant de ce plan, de part et d'autre du plan médian. Les extrémités de contact sont les points de l'armature de sommet auxquels la distance radiale entre les deux nappes de l'armature de sommet atteint ou dépasse pour la première fois 1.30·EC, où EC désigne la distance entre les deux nappes dans le plan médian. Précisons que les distances entre nappes sont mesurées entre les centres des éléments de renforcement de ces nappes.

Le pneumatique comporte en outre une nappe de découplage réalisée dans une composition caoutchouteuse et disposée axialement entre l'armature de carcasse et l'armature de rigidification, la nappe de découplage ayant une extrémité radialement intérieure et une extrémité radialement extérieure, la nappe de découplage ayant une épaisseur E1 supérieure ou égale à 0.8 mm, cette épaisseur étant mesurée perpendiculairement à l'armature de rigidification.

L'extrémité radialement intérieure de l'armature de rigidification est radialement à l'extérieur de l'extrémité radialement intérieure de la nappe de découplage, la distance radiale DB entre ces deux extrémités étant inférieure à 10 mm (et de préférence inférieure ou égale à 8 mm), et l'extrémité radialement extérieure de l'armature de rigidification est radialement à l'intérieur de l'extrémité radialement extérieure de la nappe de découplage, la distance radiale DC entre ces deux extrémités étant inférieure à 10 mm (et de préférence inférieure ou égale à 8 mm).

Précisons que le choix d'une jante de montage appropriée à un pneumatique est une opération à la portée de la personne du métier qui suivra, de manière générale, les préconisations d'organismes de normalisation tels que l'ETRTO (European Tyre and Rim Technical Organisation).

La baisse de la résistance au roulement est essentiellement due à la réduction de volume du bourrage. En effet, le bourrage est traditionnellement formé d'une composition caoutchouteuse fortement hystérétique. Lorsque le bourrage est déformé, il dissipe donc une grande quantité d'énergie. Une réduction du volume de bourrage induirait une baisse de la rigidité de dérive du pneumatique. Dans le pneumatique d'un assemblage selon l'invention, la rigidité de dérive est astucieusement maintenue par la présence de l'armature de rigidification métallique et l'amélioration de l'endurance est obtenue grâce à la nappe de découplage.

Selon un mode de réalisation avantageux, le ratio D2'/D1 est supérieur ou égal à 0.9 (et préférentiellement supérieur ou égal à 0.95) et inférieur ou égal à 0.97, où D2' désigne la distance axiale entre le point axialement le plus à l'intérieur de la structure annulaire de renforcement et le plan médian du pneumatique, mesurée lorsque le pneumatique est à l'état libre, non monté sur jante et non gonflé, et posé sur un sol de manière à ce que son axe de rotation soit parallèle au sol.

Selon un mode de réalisation avantageux, le bourrage a une épaisseur axiale E(r), cette épaisseur axiale correspondant à la longueur de l'intersection du bourrage avec une ligne droite parallèle à l'axe de rotation du pneumatique et ayant une intersection avec le bourrage à une distance radiale r du point radialement le plus à l'intérieur de la structure annulaire de renforcement, l'allure de l'épaisseur axiale E(r) étant telle que, dans le domaine des distances r comprises entre 0 % et 10 % de la hauteur radiale H du pneumatique, la variation de l'épaisseur axiale $\frac{\partial E(r)}{\partial r}$ est inférieure ou égale à - 0.5 mm/mm sur au moins 3 % de la hauteur radiale H du pneumatique.

De bons résultats ont également été obtenus avec un pneumatique dans lequel le bourrage a une épaisseur axiale E(r), cette épaisseur axiale correspondant à la longueur de l'intersection du bourrage avec une ligne droite parallèle à l'axe de rotation du pneumatique et ayant une intersection avec le bourrage à une distance radiale r du point radialement le plus à l'intérieur de la structure annulaire de renforcement, l'allure de l'épaisseur axiale E(r) étant telle que, dans le domaine des distances r comprises entre 0 % et 10 % de la hauteur radiale H du pneumatique, la variation de l'épaisseur axiale $\frac{\partial E(r)}{\partial r}$ est inférieure ou égale à - 1 mm/mm sur au moins 1.5 % de la hauteur radiale H du pneumatique.

Comme cela a été dit dans le document WO 2011/067211, la réduction de la résistance au roulement est particulièrement importante lorsque l'armature de rigidification est « fractionnée », c'est-à-dire composée d'une pluralité d'éléments de renforcement discontinus, ces éléments de renforcement étant disposés selon une pluralité de cercles concentriques à l'axe de rotation du pneumatique. Cet effet n'est pas encore complètement compris ; il semble être lié à la réduction contrôlée des rigidités d'extension de l'armature de rigidification rendue possible par le fractionnement.

D'excellents résultats sont obtenus lorsque le fractionnement de l'armature de rigidification correspond à celui pratiqué dans certaines armatures complémentaires de renforcement de pneumatiques d'engins de génie civil en vue d'améliorer leur endurance, tel que c'est enseigné dans le document US 6 935 394 B2 (aussi publié en tant que WO 03/103990 A1). Dans un pneumatique selon ce mode de réalisation avantageux, l'armature de rigidification est composée d'une pluralité d'éléments de renforcement discontinus de longueur L0, ces éléments de renforcement étant disposés selon une pluralité de cercles (C, C1, C2) concentriques à l'axe de rotation du pneumatique monté sur sa jante, chaque cercle étant défini par un rayon moyen (R, R1, R2) mesuré par rapport audit axe de rotation, chaque élément de renforcement discontinu de longueur L0 situé sur un cercle C de rayon R étant couplé mécaniquement sur des longueurs de couplage L11 et L12 respectivement avec deux éléments de renforcement discontinus situés sur un cercle C1 de rayon R1 inférieur au rayon R, ledit cercle étant immédiatement adjacent au cercle C, dans lequel les longueurs de couplage L11 et L12, L11 étant prise supérieure ou égale à L12, vérifient la relation suivante : $1.5 \leq K \leq 4$ avec K = (1-L12/L0)/(1-L11/L0).

En respectant cette relation pour tous les renforts discontinus de tous les cercles, on obtient une répartition optimale des extrémités des éléments de renforcement discontinus.

Cette répartition optimale peut être réalisée en plaçant l'armature de rigidification sur l'ébauche du pneumatique conformé en forme de tore ou bien sur un tambour de confection avant la conformation de ladite armature de rigidification.

Cette relation s'applique que la longueur L0 soit ou non identique pour tous les câbles.

Encore plus préférentiellement, K est tel que $2 \leq K \leq 2.5$.

Bien entendu, lorsqu'il est énoncé que les éléments de renforcement sont disposés sur des cercles concentriques, il faut entendre que ces éléments de renforcement peuvent être placés sur des spires et que chaque élément de renforcement est disposé sur une courbe assimilable à un arc de cercle.

Selon un mode de réalisation particulièrement avantageux, chaque élément de renforcement discontinu de longueur L0 situé sur un cercle C de rayon R est couplé mécaniquement sur des longueurs de couplage L11 et L12 avec deux éléments de renforcement discontinus situés sur un cercle C1 de rayon R1, cercle immédiatement adjacent au cercle C, la longueur de couplage L11 étant supérieure ou égale à 55 % de L0 et inférieure ou égale à 75 % de L0, et la longueur de couplage L12 étant supérieure ou égale à 10 % de L0 et inférieure ou égale à 30 % de L0 ; et chaque élément de renforcement discontinu de longueur L0 situé sur un cercle C de rayon R est couplé mécaniquement sur des longueurs de couplage L21 et L22 avec deux éléments de renforcement discontinus situés sur un cercle C2 de rayon R2, cercle immédiatement adjacent au cercle C1, la longueur de couplage L21 étant supérieure ou égale à 20 % de L0 et inférieure ou égale à 40 % de L0, et la longueur de couplage L22 étant supérieure ou égale à 45 % de L0 et inférieure ou égale à 65 % de L0.

D'excellents résultats sont obtenus lorsque la jante de montage comporte une partie formant siège de jante comportant radialement à l'extérieur un crochet de jante de profil sensiblement circulaire, et lorsque l'extrémité radialement extérieure de l'armature de rigidification est située sur une droite J2 passant par le centre J du profil du crochet de jante et faisant un angle α (alpha) ouvert axialement vers l'intérieur et radialement vers l'extérieur, l'angle α (alpha) étant supérieur ou égal à 90° et inférieur ou égal à 120°, et de préférence supérieur ou égal à 100° et inférieur ou égal à 115°.

Bien entendu, il est possible et même souhaitable de combiner deux ou plusieurs des modes de réalisations décrits.

BREVE DESCRIPTION DES DESSINS

La figure 1 représente un pneumatique selon l'art antérieur.

La figure 2 représente une vue en perspective partielle d'un pneumatique selon l'art antérieur.

La figure 3 représente, en coupe radiale, un quart d'un pneumatique selon l'art antérieur.

La figure 4 illustre comment la hauteur H d'un pneumatique est déterminée.

La figure 5 représente, en coupe radiale, une partie d'un pneumatique selon l'art antérieur.

La figure 6 illustre comment l'épaisseur axiale du bourrelet est déterminée.

La figure 7 illustre comment l'épaisseur de certaines composantes du pneumatique d'un assemblage selon l'invention est mesurée.

La figure 8 représente, en coupe radiale, une partie du pneumatique d'un assemblage selon l'invention.

La figure 9 montre la disposition des renforts d'une nappe de l'armature de rigidification employée dans les bourrelets des pneumatiques des figures 5 et 8.

Les figures 10 et 11 représentent l'allure de l'épaisseur du bourrelet du pneumatique représenté aux figures 5 et 8, et sa variation.

DESCRIPTION DETAILLEE DES DESSINS

Dans l'emploi du terme « radial » il convient de distinguer plusieurs utilisations différentes du mot par la personne du métier. Premièrement, l'expression se réfère à un rayon du pneumatique. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un fil ou une armature est dit « radial » lorsque le fil ou les éléments de renforcement de l'armature font avec la direction circonférentielle un angle supérieur ou égal à 80° et inférieur ou égal à 90°. Précisions que dans le présent document, le terme « fil » doit être entendu dans un sens tout à fait général et comprend les fils se présentant sous la forme de monofilaments, de multifilaments, d'un câble, d'un retors ou d'un assemblage équivalent, et ceci, quelle que soit la matière constituant le fil ou le traitement de surface pour favoriser sa liaison avec le caoutchouc.

Enfin, par « coupe radiale » ou « section radiale » on entend ici une coupe ou une section selon un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8. Le « plan médian » du pneumatique est le plan qui est perpendiculaire à l'axe de rotation du pneumatique et qui se situe à équidistance des structures annulaires de renforcement de chaque bourrelet.

Une direction « circonférentielle » est une direction qui est perpendiculaire à la fois à un rayon du pneumatique et à la direction axiale. Une « section circonférentielle » est une section selon un plan perpendiculaire à l'axe de rotation du pneumatique.

Par « surface de roulement » on entend ici l'ensemble des points de la bande de roulement d'un pneumatique qui sont susceptibles d'entrer en contact avec le sol lorsque le pneumatique roule.

L'expression « composition caoutchouteuse » désigne une composition de caoutchouc comportant au moins un élastomère et une charge.

Par « module d'élasticité » d'une composition caoutchouteuse, on entend le module d'extension sécant obtenu en traction selon la norme ASTM D 412 de 1998 (éprouvette « C ») : on mesure en seconde élongation (c'est-à-dire après un cycle d'accommodation) les modules sécants apparents à 10% d'allongement, notés « MA10 » et exprimés en MPa (conditions normales de température et d'hygrométrie selon la norme ASTM D 1349 de 1999). Ce module d'élasticité est à distinguer des modules d'élasticité obtenus en compression et dont les valeurs sont en général très différents des modules obtenus en extension.

Pour faciliter la lecture de la description des variantes montrées avec les figures, les mêmes références sont employées pour désigner des éléments de structure identiques.

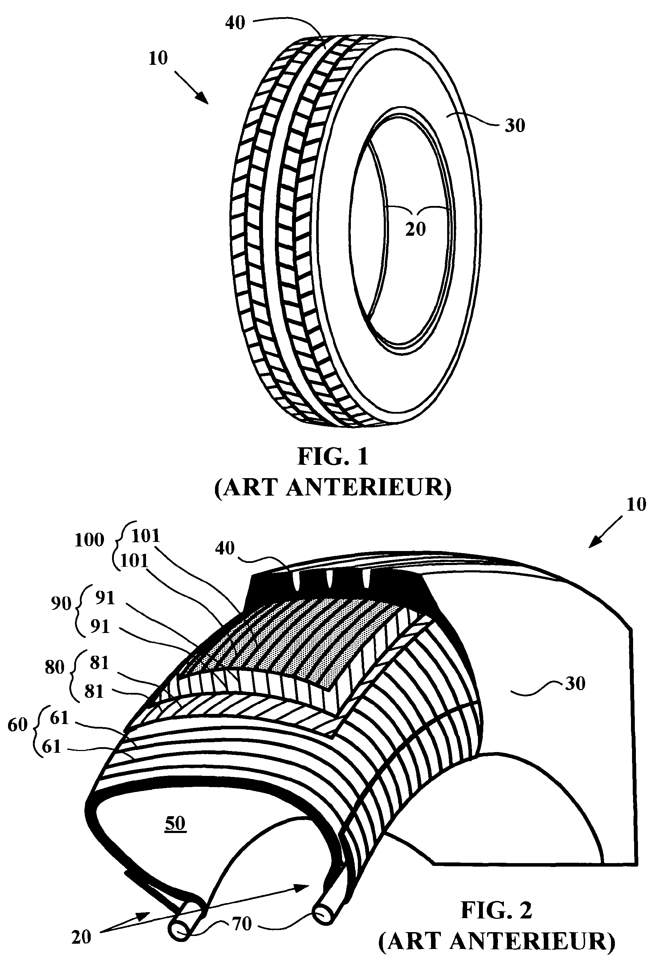

La figure 1 représente schématiquement un pneumatique 10 selon l'art antérieur. Le pneumatique 10 comporte un sommet comprenant une armature de sommet (invisible à la figure 1) surmontée d'une bande de roulement 40, deux flancs 30 prolongeant le sommet radialement vers l'intérieur, ainsi que deux bourrelets 20 radialement intérieurs aux flancs 30.

La figure 2 représente schématiquement une vue en perspective partielle d'un pneumatique 10 selon l'art antérieur et illustre les différentes composantes du pneumatique. Le pneumatique 10 comprend une armature de carcasse 60 constituée de fils 61 enrobés de composition caoutchouteuse, et deux bourrelets 20 comportant chacun des structures annulaires de renforcement 70 qui maintiennent le pneumatique 10 sur la jante (non représentée). L'armature de carcasse 60 est ancrée dans chacun des bourrelets 20 par retournement autour des structures annulaires de renforcement 70. Le pneumatique 10 comporte en outre une armature de sommet comprenant deux nappes 80 et 90. Chacune des nappes 80 et 90 est renforcée par des éléments de renforcement 81 et 91 filaires qui sont parallèles dans chaque couche et croisés d'une couche à l'autre, en faisant avec la direction circonférentielle des angles compris entre 10° et 70°. Le pneumatique comporte encore une armature de frettage 100, disposée radialement à l'extérieur de l'armature de sommet, cette armature de frettage étant formée d'éléments de renforcement 101 orientés circonférentiellement et enroulés en spirale. Une bande de roulement 40 est posée sur l'armature de frettage ; c'est cette bande de roulement 40 qui assure le contact du pneumatique 10 avec la route. Le pneumatique 10 représenté est un pneu « tubeless » : il comprend une « gomme intérieure » 50 en composition caoutchouteuse imperméable au gaz de gonflage, recouvrant la surface intérieure du pneumatique.

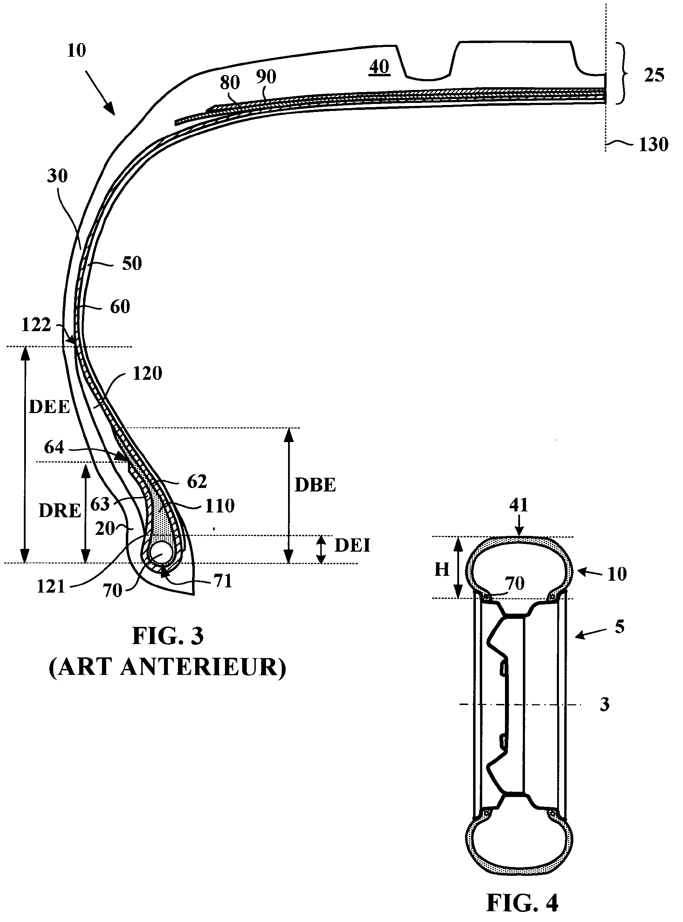

La figure 3 représente schématiquement, en coupe radiale, un quart d'un pneumatique 10 de référence, de type Energy™ Saver commercialisé par Michelin. Le pneumatique 10 comporte deux bourrelets 20 destinés à entrer en contact avec une jante de montage (non représentée), chaque bourrelet 20 comportant une tringle 70. Deux flancs 30 prolongent les bourrelets 20 radialement vers l'extérieur et s'unissent dans un sommet 25 comprenant une armature de sommet formée d'une première couche d'éléments de renforcement 80 et d'une deuxième couche d'éléments de renforcement 90, et surmontée radialement d'une bande de roulement 40. Chaque couche comprend des éléments de renforcement filaires, enrobés dans une matrice formée de composition caoutchouteuse. Les éléments de renforcement de chaque couche sont substantiellement parallèles entre eux ; les éléments de renforcement des deux couches sont croisés d'une couche à l'autre selon un angle d'environ 20°, comme cela est bien connu de la personne du métier pour les pneumatiques dits radiaux. Le plan médian du pneumatique porte la référence 130.

Le pneumatique 10 comporte encore une armature de carcasse 60 qui s'étend depuis les bourrelets 20 à travers les flancs 30 jusqu'au sommet 25. Cette armature de carcasse 60 comporte ici des éléments de renforcement filaires orientés substantiellement radialement, c'est-à-dire faisant avec la direction circonférentielle un angle supérieur ou égal à 80° et inférieur ou égal à 90°.

L'armature de carcasse 60 comporte une pluralité d'éléments de renforcement de carcasse et étant ancrée dans les deux bourrelets 20 par un retournement autour de la tringle 70, de manière à former dans chaque bourrelet un brin aller 62 et un brin retour 63. Le brin retour s'étend radialement à l'extérieur jusqu'à une extrémité 64 située à une distance radiale DRE du point 71 radialement le plus à l'intérieur de la structure annulaire de renforcement du bourrelet, la distance radiale DRE étant ici égale à 19 % de la hauteur radiale H du pneumatique.

La « hauteur radiale » H d'un pneumatique est définie comme la distance radiale entre le point 71 radialement le plus à l'intérieur de la structure annulaire de renforcement 70 du bourrelet 20 et le point 41 (figure 4) radialement le plus à l'extérieur de la bande de roulement 40 lorsque le pneumatique 10 est monté sur une jante de montage 5 (comme cela est représenté à la figure 4) et gonflé à sa pression de service.

Chaque bourrelet comporte un bourrage 110, le bourrage étant situé pour l'essentiel radialement à l'extérieur de la tringle 70 et entre le brin aller 62 et le brin retour 63 de l'armature de carcasse 60. Ici la composition caoutchouteuse utilisé à un module d'élasticité de 56 MPa.

Chaque bourrelet comporte en outre une couche ou bande extérieure 120 placée axialement à l'extérieur de l'armature de carcasse et du bourrage. La bande extérieure 120 s'étend radialement à l'extérieur d'une extrémité 121 radialement intérieure située à une distance DEI du point 71 radialement le plus à l'intérieur de la tringle 70, jusqu'à une extrémité 122 radialement extérieure située à une distance DEE du point 71 radialement le plus à l'intérieur de la tringle 70. En l'occurrence, la distance DEI est égale à 6.5 % et la distance DEE est égale à 41.5 % de la hauteur radiale H du pneumatique.

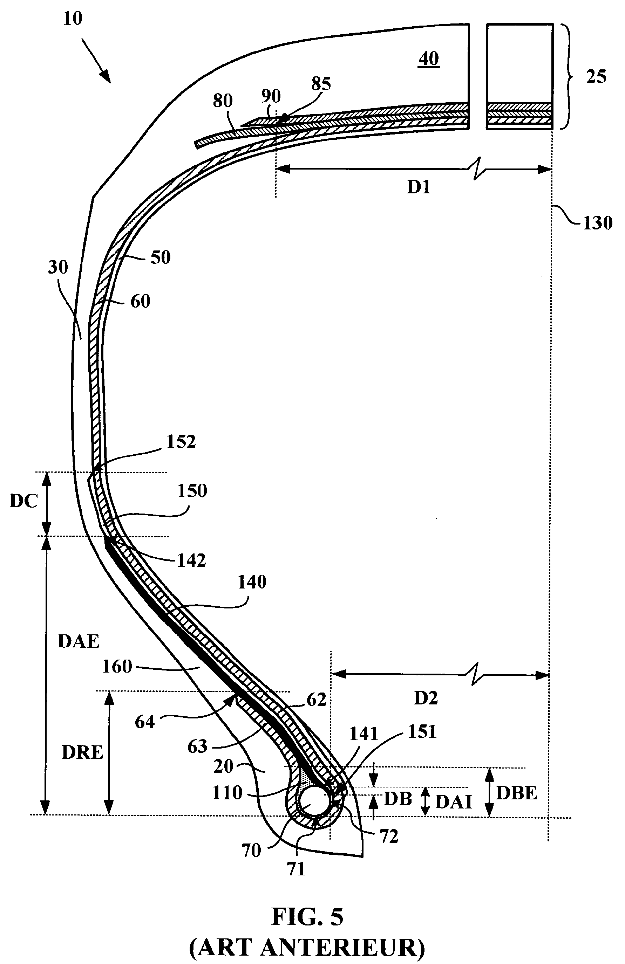

La figure 5 représente, en coupe radiale, une partie d'un pneumatique 10 divulgué dans le document WO 2011/067211 et comportant deux bourrelets 20 (dont un seul est représenté) destinés à entrer en contact avec une jante de montage (non représentée), chaque bourrelet comportant une tringle 70. La tringle 70 a un point 71 radialement le plus à l'intérieur et un point 72 axialement le plus à l'intérieur. Les deux structures annulaires de renforcement 70 (dont une seule est représentée) définissent un plan médian 130 du pneumatique, perpendiculaire à l'axe de rotation du pneumatique (non représentée) et situé à équidistance des structures annulaires de renforcement 70 de chaque bourrelet. Deux flancs 30 (dont un seul est représenté) prolongent les bourrelets 20 radialement vers l'extérieur. Les deux flancs 30 s'unissent dans un sommet 25 comprenant une armature de sommet formée par deux nappes 80 et 90, surmontée d'une bande de roulement 40. Les deux nappes 80 et 90 sont en contact l'une avec l'autre sur une partie importante de la largeur du sommet, de part et d'autre du plan médian 130, entre deux extrémités de contact, dont une seule, portant la référence 85, est représentée.

Une armature de carcasse 60 s'étend depuis les bourrelets 20 à travers les flancs 30 jusqu'au sommet 25. L'armature de carcasse 60 comporte une pluralité d'éléments de renforcement de carcasse ; elle est ancrée dans les deux bourrelets 20 par un retournement autour de la tringle 70, de manière à former dans chaque bourrelet un brin aller 62 et un brin retour 63. Le brin retour 63 s'étend radialement à l'extérieur jusqu'à une extrémité 64 située à une distance radiale DRE du point 71 radialement le plus à l'intérieur de la tringle 70. La distance radiale DRE est ici égale à 16 % de la hauteur radiale H du pneumatique.

Le bourrelet 20 comporte un bourrage 110 formé d'une composition caoutchouteuse ayant un module d'élasticité supérieur ou égal à 40 MPa et inférieur ou égal à 60 MPa.

Le Tableau I donne, à titre d'exemple, la composition d'une composition caoutchouteuse pouvant être utilisé comme bourrage. La composition est donnée en pce (« pour cent élastomère »), c'est-à-dire en parties en poids pour 100 parties en poids d'élastomère. Le module élastique MA10 correspondant est également indiqué.

Tableau I

|  | Parts en pce |
| --- | --- |
| NR [1] | 100 |
| N 330 [2] | 75 |
| Résine formophénol | 18 |
| Antioxydant (6PPD) [3] | 1 |
| Naphténate de cobalt | 6 |
| Acide stéarique | 0.5 |
| ZnO | 9 |
| HMT3H [4] | 2 |
| Soufre | 9 |
| Accélérateur (TBBS) [5] | 1 |
| MA10 | $52 \pm 2$ |

Annotations au Tableau I :

[1] Caoutchouc naturel

[2] Noir de carbone série 330 (ASTM)

[3] N-(1,3-diméthylbutyl)-N'-phényl-p-phénylènediamine

[4] Hexaméthylènetétramine

[5] N-ter-butyl-2-benzothiazyle sulfénamide

Le bourrage est préférentiellement à base d'au moins un élastomère diénique, une charge renforçante et un système de réticulation.

Par élastomère (ou indistinctement caoutchouc) « diénique », on entend de manière connue un élastomère issu au moins en partie (i.e., un homopolymère ou un copolymère) de monomères diènes c'est-à-dire de monomères porteurs de deux doubles liaisons carbone-carbone, conjuguées ou non. L'élastomère diénique utilisé est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères.

Un mode de réalisation préférentiel consiste à utiliser un élastomère « isoprénique », c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon d'autres modes de réalisation préférentiels, l'élastomère diénique peut être constitué, en tout ou partie, d'un autre élastomère diénique tel que, par exemple, un élastomère SBR (E-SBR ou S-SBR) utilisé en coupage ou non avec un autre élastomère, par exemple du type BR.

La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou des charges inorganiques comme la silice, des agents de couplage pour charge inorganique, des agents anti-vieillissement, des antioxydants, des agents plastifiants ou des huiles d'extension, que ces derniers soient de nature aromatique ou non aromatique (notamment des huiles très faiblement ou non aromatiques, par exemple du type naphténiques ou paraffiniques, à haute ou de préférence à basse viscosité, des huiles MES ou TDAE, des résines plastifiantes à haute Tg supérieure à 30°C), des agents facilitant la mise en oeuvre (processabilité) des compositions à l'état cru, des résines tackifiantes, un système de réticulation à base soit de soufre, soit de donneurs de soufre et/ou de peroxyde, des accélérateurs, des activateurs ou retardateurs de vulcanisation, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt ou de nickel.

Les compositions sont fabriquées dans des mélangeurs appropriés, en utilisant deux phases de préparation successives bien connues de l'homme du métier : une première phase de travail ou malaxage thermomécanique (phase dite « non productive ») à haute température, jusqu'à une température maximale comprise entre 110°C et 190°C, de préférence entre 130°C et 180°C, suivie d'une seconde phase de travail mécanique (phase dite « productive ») jusqu'à une plus basse température, typiquement inférieure à 110°C, phase de finition au cours de laquelle est incorporé le système de réticulation.

A titre d'exemple, la phase non productive est conduite en une seule étape thermomécanique de quelques minutes (par exemple entre 2 et 10 min) au cours de laquelle on introduit, dans un mélangeur approprié tel qu'un mélangeur interne usuel, tous les constituants de base nécessaires et autres additifs, à l'exception du système de réticulation ou vulcanisation. Après refroidissement du mélange ainsi obtenu, on incorpore alors dans un mélangeur externe tel qu'un mélangeur à cylindres, maintenu à basse température (par exemple entre 30°C et 100°C), le système de vulcanisation. L'ensemble est alors mélangé (phase productive) pendant quelques minutes (par exemple entre 5 et 15 min).

La composition finale ainsi obtenue est ensuite calandrée, par exemple sous la forme d'une feuille ou plaque pour caractérisation, ou encore extrudée, pour former la ou les couches de composition caoutchouteuse de très haut module utilisée dans le pneumatique d'un assemblage selon l'invention.

La vulcanisation (ou cuisson) peut ensuite être conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

Le bourrage 110 est situé, pour l'essentiel, radialement à l'extérieur de la tringle, entre le brin aller 62 et le brin retour 63 de l'armature de carcasse 60. Il s'étend radialement jusqu'à une distance radiale DBE du point 71 radialement le plus à l'intérieur de la tringle 70. La distance radiale DBE est ici égale à 8 % de la hauteur radiale H du pneumatique 10. Cette faible hauteur radiale du bourrage contribue à la basse résistance au roulement du pneumatique. Un bourrage de volume quasiment résiduel peut être conservé, notamment pour faciliter la fabrication de l'ensemble du bourrelet, sans qu'il entraîne une perte hystérétique significative. En effet, dans l'environnement immédiat de la tringle et du siège de la jante, qui sont extrêmement rigides, les déformations subies au cours du roulage sont très faibles. En revanche, pour maintenir une bonne tenue de route du pneumatique, notamment aux fortes charges, la réduction générale du volume de bourrage est avantageusement compensée par la présence d'une armature de rigidification supplémentaire qui n'engendre, elle, qu'une perte hystérétique réduite.

Le flanc 30 comporte donc une armature de rigidification 140 formée d'une pluralité d'éléments de renforcement métalliques orientés selon un angle nul ou faible, c'est-à-dire inférieur ou égal à 10 degrés par rapport à la direction circonférentielle. Cette armature de rigidification 140 est disposée de telle sorte que la distance DAE entre le point 71 radialement le plus à l'intérieur de la tringle 70 et l'extrémité 142 radialement extérieure de l'armature de rigidification 140 est égale à 35 % de la hauteur radiale H du pneumatique 10. La distance DAI entre le point 71 radialement le plus à l'intérieur de la tringle 70 et l'extrémité radialement intérieure 141 de l'armature de rigidification 140 est ici égale à 4 % de la hauteur radiale H du pneumatique 10.

Une « nappe de découplage » 150 se trouve axialement entre l'armature de rigidification 140 et le brin aller 62 de l'armature de carcasse 60. La nappe de découplage a une extrémité 151 radialement intérieure et une extrémité 152 radialement extérieure. En subissant un cisaillement, cette nappe de découplage 150 permet de transmettre la tension méridienne de l'armature de carcasse 60 à l'armature de rigidification 140. Elle limite donc les contraintes de transfert entre l'armature de rigidification 140 et l'armature de carcasse 60 et régularise en même temps l'épaisseur dans laquelle s'exercent ces contraintes, ce qui contribue à une meilleure répartition de ces contraintes.

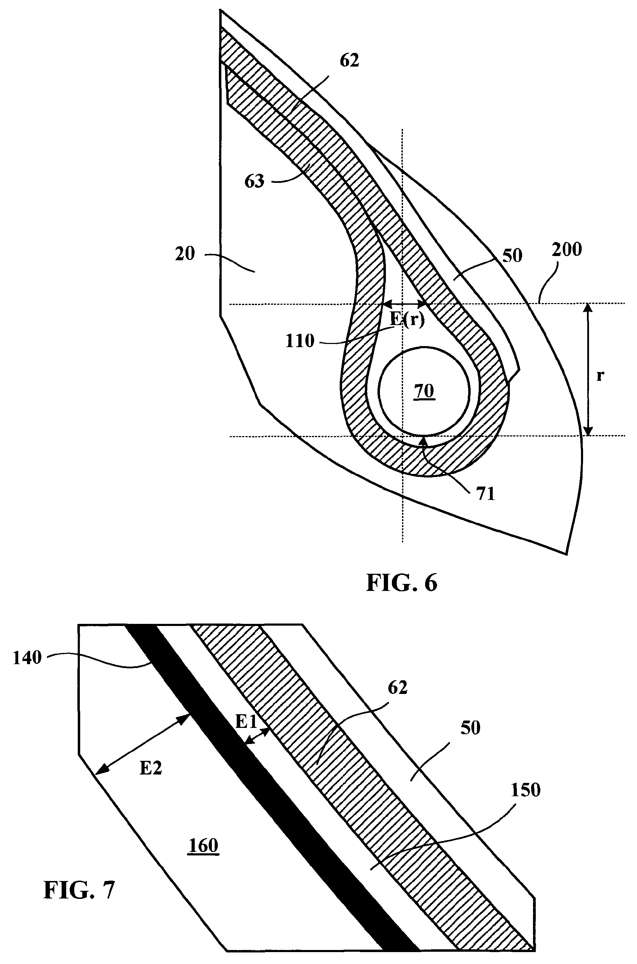

Le bourrage 110 a une épaisseur axiale E(r) qui est déterminée comme cela est illustré à la figure 6. L'épaisseur axiale E(r) correspond à la longueur de l'intersection du bourrage avec une ligne droite 200 parallèle à l'axe de rotation du pneumatique (indiqué à l'aide de la référence 3 à la figure 4) et ayant une intersection avec le bourrage 110 à une distance radiale r du point 71 radialement le plus à l'intérieur de la tringle 70.

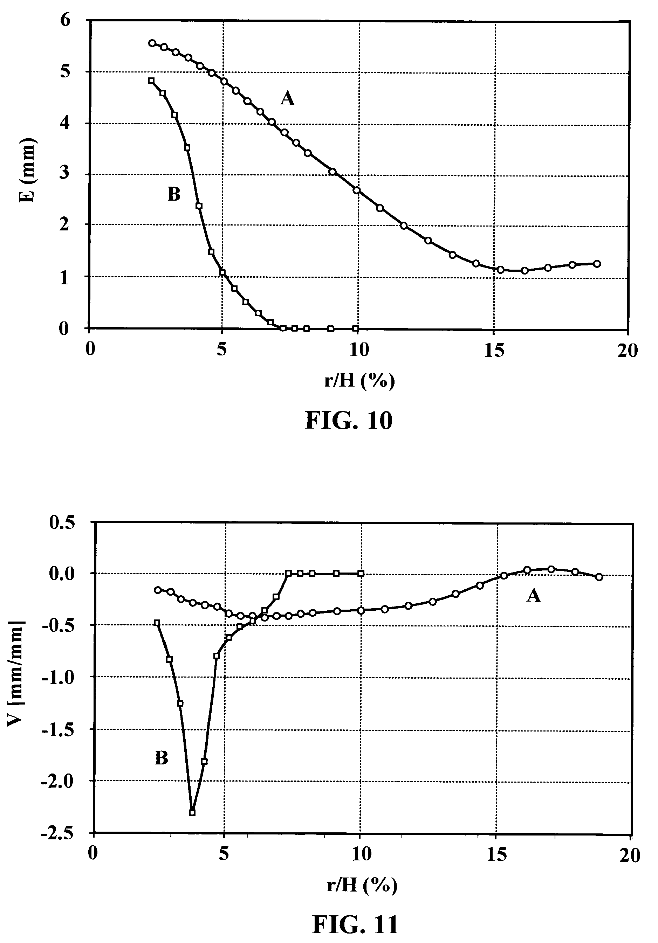

L'allure de l'épaisseur axiale E(r) du bourrage 110 du pneumatique représenté à la figure 5 est tracée à la figure 10 (courbe B) et comparée à l'allure de l'épaisseur axiale E(r) du bourrage 110 du pneumatique de référence représenté à la figure 3. La figure 11 compare la variation de l'épaisseur $V = \dfrac{\partial E(r)}{\partial r}$ pour les deux bourrages. Il apparaît que le bourrage représenté à la figure 5 correspond à un mode de réalisation particulier selon lequel l'allure de l'épaisseur axiale E(r) est telle que, dans le domaine des distances r comprises entre 0 % et 10 % de la hauteur radiale H du pneumatique, la variation de l'épaisseur $\dfrac{\partial E(r)}{\partial r}$ est inférieure ou égale à - 0.5 mm/mm sur un peu plus de 3 % de la hauteur radiale H du pneumatique. En l'occurrence, la variation de l'épaisseur axiale $\dfrac{\partial E(r)}{\partial r}$ est même inférieure ou égale à -1 mm/mm sur 1.5 % de la hauteur radiale H du pneumatique.

L'armature de rigidification 140 du pneumatique 10 représenté à la figure 5 est composée d'une pluralité d'éléments de renforcement discontinus, ces éléments de renforcement étant disposés selon une pluralité de cercles (C, C1, C2) concentriques à l'axe de rotation du pneumatique, chaque cercle étant défini par un rayon moyen R, R1, R2 mesuré par rapport à l'axe de rotation comme cela est illustré à la figure 10. Il s'agit bien entendu d'un schéma simplifié, limité à trois spires, pour expliquer le principe de la disposition des renforts. L'armature de rigidification peut naturellement comporter davantage de spires.

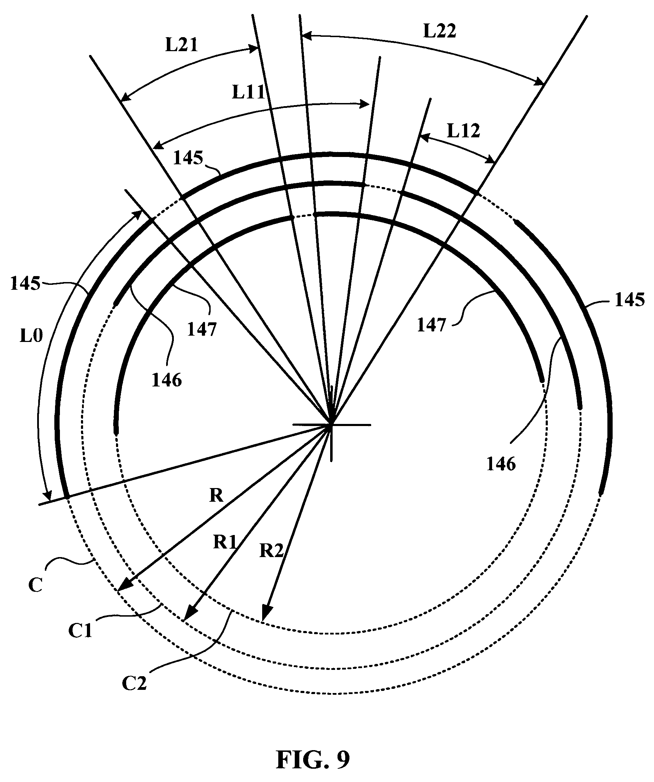

La figure 9 montre l'arrangement des éléments de renforcement de l'armature de rigidification 140 du pneumatique 10 sur trois cercles voisins C, C1 et C2, chaque cercle étant centré sur l'axe de rotation de l'ensemble formé par le pneumatique et la jante de montage. Tous les éléments de renforcement sont métalliques et ont sensiblement une même longueur égale L0, dans le cas présent 125 mm. Le pas entre cercles voisins C, C1 et C2, sur lesquels sont disposés les éléments de renforcement discontinus est égal au diamètre des éléments de renforcement augmenté d'au moins 0.2 mm, et de préférence d'au moins 0.5 mm.

Sur la figure 10, on a représenté partiellement l'armature 140, l'axe de rotation du pneumatique étant perpendiculaire au plan de la figure. On voit qu'un élément de renforcement 145 de longueur L0 sur le cercle C de rayon R est couplé mécaniquement selon les longueurs d'arc L11 et L12 avec deux éléments de renforcement 146 du cercle C1 de rayon R1 (R1 étant inférieur à R) adjacent au cercle C. Le même élément de renforcement 145 est couplé selon des longueurs d'arc L21 et L22 avec deux éléments de renforcement 147. Dans le cas présenté les longueurs de couplage sont : L11 = 87.9 mm (soit 70 % de L0) ; L12 = 37.7 mm (soit 30 % de L0) ; L21 = 50.2 mm (soit 40 % de L0) ; L22 = 75.3 mm (soit 60 % de L0). Ces longueurs de couplage vérifient la relation $1.5 \le K \le 4$ avec K = (1-L12/L0)/(1-L11/L0). En effet, la valeur prise par K est de 2.3 lorsqu'on considère les valeurs de couplage entre un élément de renforcement 145 de longueur L0 sur le cercle C et les éléments de renforcement 146 du cercle C1 de rayon R1 (R1 étant inférieur à R) adjacent au cercle C.

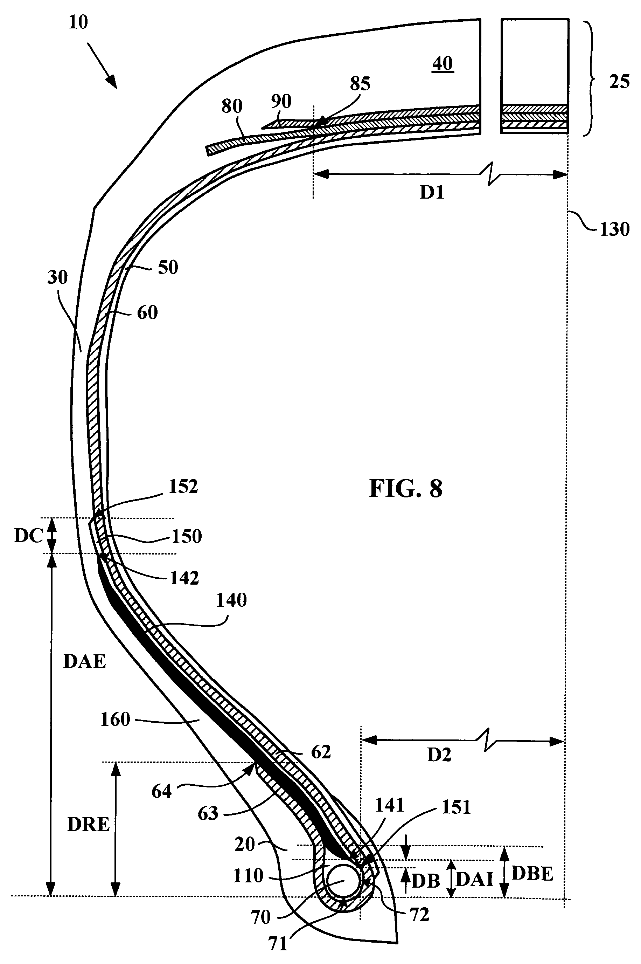

La figure 8 représente, en coupe radiale, une partie du pneumatique d'un assemblage selon l'invention. Ce pneumatique reprend les caractéristiques du pneumatique de l'art antérieur décrit ci-dessus et le perfectionne en vue d'améliorer son endurance. Par souci de concision, seulement les points distinctifs de ce pneumatique par rapport au pneumatique selon l'art antérieur représenté à la figure 5 seront mis en évidence.

Comme dans le pneumatique représenté à la figure 5, une portion 160 de composition caoutchouteuse est disposée axialement à l'extérieur de l'armature de rigidification. L'épaisseur E2 de cette portion de composition caoutchouteuse, mesurée perpendiculairement à l'armature de rigidification (comme cela est montré à la figure 7) est supérieure ou égale à 1.2 mm en tout point. Dans le pneumatique de la figure 5, cette épaisseur E2 est égale à 1 mm.

De même, la nappe de découplage 150 a une épaisseur E1 supérieure ou égale à 0.8 mm, cette épaisseur étant mesurée perpendiculairement à l'armature de rigidification (voir figure 7). Dans le pneumatique de la figure 5, cette épaisseur E1 est égale à 0.6 mm.

Le ratio D2/D1 égal à 1.05, si D1 désigne la distance axiale entre chaque extrémité de contact 85 et le plan médian 130 du pneumatique 10 et D2 est la distance axiale entre le point 72 axialement le plus à l'intérieur de la structure annulaire de renforcement 70 et le plan médian 130 du pneumatique. Les distances D1 et D2 sont mesurées lorsque le pneumatique 10 est monté sur la jante de montage et gonflé à sa pression de service.

Par ailleurs, le ratio D2'/D1 est égal à 0.96, si D2' désigne la distance axiale entre le point axialement le plus à l'intérieur de la structure annulaire de renforcement et le plan médian du pneumatique, mesurée lorsque le pneumatique est à l'état libre, non monté sur jante et non gonflé, et posé sur un sol de manière à ce que son axe de rotation soit parallèle au sol. En cela le pneumatique se distingue du pneumatique de référence de la figure 3, pour lequel D2'/D1 est égal à 1.23.

L'extrémité 141 radialement intérieure de l'armature de rigidification 140 est radialement à l'extérieur de l'extrémité 151 radialement intérieure de la nappe de découplage 150 : la distance radiale DB entre ces deux extrémités est égale à 2.2 mm.

L'extrémité 142 radialement extérieure de l'armature de rigidification 140 est radialement à l'intérieur de l'extrémité 152 radialement extérieure de la nappe de découplage, la distance radiale DC entre ces deux extrémités étant égale à 5 mm alors que la distance DC est égale à 10 mm pour le pneumatique de la figure 5.

Un assemblage selon l'invention, correspondant au pneumatique représenté à la figure 8, un assemblage de l'art antérieur (le pneumatique représenté à la figure 5, monté sur la même jante de montage) et un assemblage de référence, correspondant au pneumatique représenté à la figure 3, monté sur la même jante de montage, ont été comparés en roulage (dimension d'étude : 205/55 R16). L'assemblage selon l'invention a obtenu un gain en résistance au roulement de 0.4 kg par tonne par rapport au pneumatique de référence, pour une même rigidité de dérive, à la même charge et à la même pression de gonflage ; son endurance est très significativement améliorée par rapport au pneumatique représenté à la figure 5. Le tableau II montre ce même résultat ramené à la résistance au roulement de l'assemblage de référence.

Tableau II

| Variante | Figure | Résistance au roulement (base 100) | Kilométrage endurance (base 100) |
|---|---|---|---|
| Référence | 3 | 100 | 100 |
| Art antérieur | 5 | 95 | 74 |
| Invention | 8 | 95 | 100 |

On constate que l'assemblage selon l'invention permet d'améliorer de manière très notable l'endurance par rapport à l'assemblage selon l'art antérieur.

La demanderesse s'explique ces différences de performance surprenantes, obtenues malgré des différences structurelles relativement modestes, par le fait que les épaisseurs de composition caoutchouteuse environnant les éléments de renforcement métalliques de l'armature de rigidification ont été augmentées. Même une augmentation relativement faible (en l'occurrence, de 1 à 1.2 mm) permet au flanc de mieux absorber les cisaillements, ce qui entraîne une augmentation notable de l'endurance du pneumatique.

**Revendications**

1.  Assemblage comprenant un pneumatique (10) et une jante de montage (5), le pneumatique ayant un axe de rotation (3) et comportant :

    deux bourrelets (20) destinés à entrer en contact avec la jante de montage, chaque bourrelet comportant au moins une structure annulaire de renforcement (70), chaque structure annulaire de renforcement ayant un point axialement le plus à l'intérieur, les deux structures annulaires de renforcement (70) définissant un plan médian (130) du pneumatique, perpendiculaire à l'axe de rotation (3) du pneumatique et situé à équidistance des structures annulaires de renforcement de chaque bourrelet ;

deux flancs (30) prolongeant les bourrelets radialement vers l'extérieur, les deux flancs s'unissant dans un sommet (25) comprenant une armature de sommet comportant deux nappes (80,90) comportant chacune des éléments de renforcement et étant en contact l'une avec l'autre sur une partie du moins de la largeur du sommet, cette partie s'étendant de part et d'autre du plan médian (130) du pneumatique, entre deux extrémités de contact (85), l'armature de sommet étant surmontée d'une bande de roulement (40) ;

au moins une armature de carcasse (60) s'étendant depuis les bourrelets à travers les flancs jusqu'au sommet, l'armature de carcasse comportant une pluralité d'éléments de renforcement (61) de carcasse et étant ancrée dans les deux bourrelets par un retournement autour de la structure annulaire de renforcement, de manière à former dans chaque bourrelet un brin aller (62) et un brin retour (63), chaque brin retour s'étendant radialement à l'extérieur jusqu'à une extrémité (64) située à une distance radiale DRE du point (71) radialement le plus à l'intérieur de la structure annulaire de renforcement du bourrelet, la distance radiale DRE étant supérieure ou égale à 5 % et inférieure ou égale à 20 % de la hauteur radiale H du pneumatique ;

dans lequel chaque bourrelet comporte un bourrage (110) formé d'une composition caoutchouteuse, le bourrage étant situé, au moins partiellement, radialement à l'extérieur de la structure annulaire de renforcement et au moins partiellement entre le brin aller et le brin retour de l'armature de carcasse, le bourrage s'étendant radialement jusqu'à une distance radiale DBE du point radialement le plus à l'intérieur de la structure annulaire de renforcement du bourrelet, la distance radiale DBE étant inférieure ou égale à 10 % de la hauteur radiale H du pneumatique,

dans lequel au moins un flanc du pneumatique comporte en outre une armature de rigidification (140) ayant une extrémité (141) radialement intérieure et une extrémité (142) radialement extérieure, l'armature de rigidification étant formée d'une pluralité d'éléments de renforcement (145, 146, 147) métalliques orientés selon un angle inférieur ou égal à 10 degrés par rapport à la direction circonférentielle, cette armature de rigidification étant disposée de telle sorte que la distance DAE entre le point (71) radialement le plus à l'intérieur de la structure annulaire de renforcement et l'extrémité (142) radialement extérieure de l'armature de rigidification est supérieure ou égale à 20 % et inférieure ou égale à 40 % de la hauteur radiale H du pneumatique et que la distance DAI entre le point (71) radialement le plus à l'intérieur de la structure annulaire de renforcement et l'extrémité (141) radialement intérieure de l'armature de rigidification est supérieure ou égale à 5 % et inférieure ou égale à 15 % de la hauteur radiale H du pneumatique, **caractérisé en ce que** :

- une portion (160) de composition caoutchouteuse est disposée axialement à l'extérieur de l'armature de rigidification, l'épaisseur (E2) de cette portion de composition caoutchouteuse, mesurée perpendiculairement à l'armature de rigidification, est supérieure ou égale à 1.2 mm en tout point ;

- le ratio D2/D1 est supérieur ou égal à 1, où D1 désigne la distance axiale entre chaque extrémité de contact et le plan médian (130) du pneumatique et D2 est la distance axiale entre le point axialement le plus à l'intérieur de la structure annulaire de renforcement (70) et le plan médian (130) du pneumatique, les distances D1 et D2 étant mesurées lorsque le pneumatique est monté sur la jante de montage (5) et gonflé à une pression de service ;

- le pneumatique comporte en outre une nappe de découplage (150) réalisée dans une composition caoutchouteuse et disposée axialement entre l'armature de carcasse (60) et l'armature de rigidification (140), la nappe de découplage ayant une extrémité (151) radialement intérieure et une extrémité (152) radialement extérieure, la nappe de découplage ayant une épaisseur (E1) supérieure ou égale à 0.8 mm, cette épaisseur étant mesurée perpendiculairement à l'armature de rigidification ;

- l'extrémité (141) radialement intérieure de l'armature de rigidification (140) est radialement à l'extérieur de l'extrémité (151) radialement intérieure de la nappe de découplage (150), la distance radiale (DB) entre ces deux extrémités étant inférieure à 10 mm, et

- l'extrémité (142) radialement extérieure de l'armature de rigidification (140) est radialement à l'intérieur de l'extrémité (152) radialement extérieure de la nappe de découplage, la distance radiale (DC) entre ces deux extrémités étant inférieure à 10 mm.

2. Assemblage selon la revendication 1, dans lequel la distance (DB) séparant l'extrémité (141) radialement intérieure de l'armature de rigidification (140) et l'extrémité (151) radialement intérieure de la nappe de découplage est inférieure ou égale à 8 mm.

3. Assemblage selon la revendication 1 ou 2, dans lequel la distance (DC) séparant l'extrémité (141) radialement extérieure de l'armature de rigidification (140) et l'extrémité (151) radialement extérieure de la nappe de découplage est inférieure ou égale à 8 mm.

**4.** Assemblage selon l'une quelconque des revendications 1 à 3, dans lequel le ratio D2'/D1 est supérieur ou égal à 0.9 et inférieur ou égal à 0.97, où D2' désigne la distance axiale entre le point axialement le plus à l'intérieur de la structure annulaire de renforcement et le plan médian du pneumatique, mesurée lorsque le pneumatique est à l'état libre, non monté sur jante et non gonflé, et posé sur un sol de manière à ce que son axe de rotation soit parallèle au sol.

**5.** Assemblage selon l'une quelconque des revendications 1 à 4, dans lequel la distance radiale DRE est supérieure ou égale à 7 % et inférieure ou égale à 18 % de la hauteur radiale H du pneumatique.

**6.** Assemblage selon l'une quelconque des revendications 1 à 5, dans lequel la distance DAE entre le point (71) radialement le plus à l'intérieur de la structure annulaire de renforcement (70) et l'extrémité (142) radialement extérieure de l'armature de rigidification (140) est supérieure ou égale à 25 % et inférieure ou égale à 35 % de la hauteur radiale H du pneumatique.

**7.** Assemblage selon l'une quelconque des revendications 1 à 6, dans lequel le bourrage (110) a une épaisseur axiale E(r), cette épaisseur correspondant à la longueur de l'intersection du bourrage avec une ligne droite (200) parallèle à l'axe de rotation (3) du pneumatique et ayant une intersection avec le bourrage à une distance radiale r du point (71) radialement le plus à l'intérieur de la structure annulaire de renforcement (70), l'allure de l'épaisseur E(r) étant telle que, dans le domaine des distances r comprises entre 0 % et 10 % de la hauteur radiale H du pneumatique, la variation de l'épaisseur $\frac{\partial E(r)}{\partial r}$ est inférieure ou égale à - 0.5 mm/mm sur au moins 3 % de la hauteur radiale H du pneumatique.

**8.** Assemblage selon l'une quelconque des revendications 1 à 6, dans lequel le bourrage (110) a une épaisseur axiale E(r), cette épaisseur axiale correspondant à la longueur de l'intersection du bourrage avec une ligne droite (200) parallèle à l'axe de rotation (3) du pneumatique et ayant une intersection avec le bourrage à une distance radiale r du point (71) radialement le plus à l'intérieur de la structure annulaire de renforcement (70), l'allure de l'épaisseur axiale E(r) étant telle que, dans le domaine des distances r comprises entre 0 % et 10 % de la hauteur radiale H du pneumatique, la variation de l'épaisseur axiale $\frac{\partial E(r)}{\partial r}$ est inférieure ou égale à - 1 mm/mm sur au moins 1.5 % de la hauteur radiale H du pneumatique.

**9.** Assemblage selon l'une quelconque des revendications 1 à 8, dans lequel l'armature de rigidification (140) est composée d'une pluralité d'éléments de renforcement discontinus, ces éléments de renforcement étant disposés selon une pluralité de cercles (C, C1, C2) concentriques à l'axe de rotation du pneumatique.

**10.** Assemblage selon l'une quelconque des revendications 1 à 9, dans lequel l'armature de rigidification est composée d'une pluralité d'éléments de renforcement (145, 146, 147) discontinus de longueur L0, ces éléments de renforcement étant disposés selon une pluralité de cercles (C, C1, C2) concentriques à l'axe de rotation (3) du pneumatique monté sur sa jante, chaque cercle étant défini par un rayon moyen (R, R1, R2) mesuré par rapport audit axe de rotation, chaque élément de renforcement (145) discontinu de longueur L0 situé sur un cercle C de rayon R étant couplé mécaniquement sur des longueurs de couplage L11 et L12 respectivement avec deux éléments de renforcement (146, 147) discontinus situés sur un cercle C1 de rayon R1 inférieur au rayon R, ledit cercle étant immédiatement adjacent au cercle C, dans lequel les longueurs de couplage L11 et L12, L11 étant prise supérieure ou égale à L12, vérifient la relation suivante : 1.5 ≤ K ≤ 4 avec K = (1-L12/L0)/(1-L11/L0).

**11.** Assemblage selon la revendication 10, dans lequel :

(a) chaque élément de renforcement (145) discontinu de longueur L0 situé sur un cercle C de rayon R est couplé mécaniquement sur des longueurs de couplage L11 et L12 avec deux éléments (146) de renforcement discontinus situés sur un cercle C1 de rayon R1, cercle immédiatement adjacent au cercle C, la longueur de couplage L11 étant supérieure ou égale à 55 % de L0 et inférieure ou égale à 75 % de L0, et la longueur de couplage L12 étant supérieure ou égale à 10 % de L0 et inférieure ou égale à 30 % de L0 ;
(b) chaque élément de renforcement (145) discontinu de longueur L0 situé sur un cercle C de rayon R est couplé mécaniquement sur des longueurs de couplage L21 et L22 avec deux éléments de renforcement (147) discontinus situés sur un cercle C2 de rayon R2, cercle immédiatement adjacent au cercle C1, la longueur de couplage L21 étant supérieure ou égale à 20 % de L0 et inférieure ou égale à 40 % de L0, et la longueur de couplage L22 étant supérieure ou égale à 45 % de L0 et inférieure ou égale à 65 % de L0.

12. Assemblage selon la revendication 11, dans lequel ladite jante de montage (5) comporte une partie formant siège de jante comportant radialement à l'extérieur un crochet de jante (6) de profil sensiblement circulaire, et dans lequel l'extrémité radialement extérieure de l'armature de rigidification est située sur une droite J2 passant par le centre J du profil du crochet de jante et faisant un angle α (alpha) ouvert axialement vers l'intérieur et radialement vers l'extérieur, l'angle α (alpha) étant supérieur ou égal à 90° et inférieur ou égal à 120°.

13. Assemblage selon la revendication 12, dans lequel l'angle α (alpha) est supérieur ou égal à 100° et inférieur ou égal à 115°.

**Patentansprüche**

1. Anordnung, die einen Luftreifen (10) und eine Montagefelge (5) enthält, wobei der Luftreifen eine Drehachse (3) hat und aufweist:

zwei Wülste (20), die dazu bestimmt sind, mit der Montagefelge in Kontakt zu kommen, wobei jeder Wulst mindestens eine ringförmige Verstärkungsstruktur (70) aufweist, wobei jede ringförmige Verstärkungsstruktur einen axial am weitesten innen liegenden Punkt hat, wobei die zwei ringförmigen Verstärkungsstrukturen (70) eine Mittelebene (130) des Luftreifens definieren, die lotrecht zur Drehachse (3) des Luftreifens ist und sich in gleichem Abstand zu den ringförmigen Verstärkungsstrukturen jedes Wulsts befindet;
zwei Flanken (30), die die Wülste radial nach außen verlängern, wobei die zwei Flanken sich in einem Scheitel (25) vereinen, der eine Scheitelbewehrung enthält, die zwei Lagen (80, 90) aufweist, die je Verstärkungselemente enthalten und über mindestens einen Teil der Breite des Scheitels miteinander in Kontakt stehen, wobei dieser Teil sich zu beiden Seiten der Mittelebene (130) des Luftreifens zwischen zwei Kontaktenden (85) erstreckt, wobei die Scheitelbewehrung von einem Laufstreifen (40) überlagert wird;
mindestens eine Karkassenbewehrung (60), die sich von den Wülsten durch die Flanken bis zum Scheitel erstreckt, wobei die Karkassenbewehrung eine Vielzahl von Karkassenverstärkungselementen (61) aufweist und in den zwei Wülsten durch einen Umschlag um die ringförmige Verstärkungsstruktur verankert ist, um in jedem Wulst einen VorlaufStrang (62) und einen Rücklauf-Strang (63) zu bilden, wobei jeder Rücklauf-Strang sich radial außen bis zu einem Ende (64) erstreckt, das sich in einem radialen Abstand DRE vom radial am weitesten innen liegenden Punkt (71) der ringförmigen Verstärkungsstruktur des Wulsts befindet, wobei der radiale Abstand DRE größer als oder gleich 5% und kleiner oder gleich als 20% der radialen Höhe H des Luftreifens ist;
wobei jeder Wulst eine Füllung (110) aufweist, die von einer Kautschukzusammensetzung gebildet wird, wobei die Füllung sich zumindest teilweise radial außerhalb der ringförmigen Verstärkungsstruktur und zumindest teilweise zwischen dem VorlaufStrang und dem Rücklauf-Strang der Karkassenbewehrung befindet, wobei die Füllung sich radial bis zu einem radialen Abstand DBE vom radial am weitesten innen liegenden Punkt der ringförmigen Verstärkungsstruktur des Wulsts befindet, wobei der radiale Abstand DBE kleiner als oder gleich 10% der radialen Höhe H des Luftreifens ist,
wobei mindestens eine Flanke des Luftreifens außerdem eine Versteifungsbewehrung (140) aufweist, die ein radial inneres Ende (141) und ein radial äußeres Ende (142) hat, wobei die Versteifungsbewehrung von einer Vielzahl von metallischen Verstärkungselementen (145, 146, 147) gebildet wird, die gemäß einem Winkel von weniger als oder gleich 10 Grad bezüglich der Umfangsrichtung ausgerichtet sind, wobei diese Versteifungsbewehrung so angeordnet ist, dass der Abstand DAE zwischen dem radial am weitesten innen liegenden Punkt (71) der ringförmigen Verstärkungsstruktur und dem radial äußeren Ende (142) der Versteifungsbewehrung größer als oder gleich 20% und kleiner als oder gleich 40% der radialen Höhe H des Luftreifens ist, und dass der Abstand DAI zwischen dem radial am weitesten innen liegenden Punkt (71) der ringförmigen Verstärkungsstruktur und dem radial inneren Ende (141) der Versteifungsbewehrung größer als oder gleich 5% und kleiner als oder gleich 15% der radialen Höhe H des Luftreifens ist,
**dadurch gekennzeichnet, dass**:

- ein Kautschukzusammensetzungsabschnitt (160) axial außerhalb der Versteifungsbewehrung angeordnet ist, wobei die Dicke (E2) dieses Kautschukzusammensetzungsabschnitts, gemessen lotrecht zur Versteifungsbewehrung, an jedem Punkt größer als oder gleich 1,2 mm ist;
- das Verhältnis D2/D1 größer als oder gleich 1 ist, wobei D1 den axialen Abstand zwischen jedem Kontaktende und der Mittelebene (130) des Luftreifens bezeichnet und D2 der axiale Abstand zwischen dem axial am weitesten innen liegenden Punkt der ringförmigen Verstärkungsstruktur (70) und der Mittelebene (130) des Luftreifens ist, wobei die Abstände D1 und D2 gemessen werden, wenn der Luftreifen auf die Montagefelge (5) montiert und auf einen Betriebsdruck aufgepumpt ist;

- der Luftreifen außerdem eine Entkopplungslage (150) aufweist, die aus einer Kautschukzusammensetzung hergestellt und axial zwischen der Karkassenbewehrung (60) und der Versteifungsbewehrung (140) angeordnet ist, wobei die Entkopplungslage ein radial inneres Ende (151) und ein radial äußeres Ende (152) hat, wobei die Entkopplungslage eine Dicke (E1) größer als oder gleich 0,8 mm hat, wobei diese Dicke lotrecht zur Versteifungsbewehrung gemessen wird;

- das radial innere Ende (141) der Versteifungsbewehrung (140) radial außerhalb des radial inneren Endes (151) der Entkopplungslage (150) ist, wobei der radiale Abstand (DB) zwischen diesen beiden Enden kleiner als 10 mm ist, und

- das radial äußere Ende (142) der Versteifungsbewehrung (140) radial innerhalb des radial äußeren Endes (152) der Entkopplungslage ist, wobei der radiale Abstand (DC) zwischen diesen zwei Enden kleiner als 10 mm ist.

2. Anordnung nach Anspruch 1, wobei der das radial innere Ende (141) der Versteifungsbewehrung (140) und das radial innere Ende (151) der Entkopplungslage trennende Abstand (DB) kleiner als oder gleich 8 mm ist.

3. Anordnung nach Anspruch 1 oder 2, wobei der das radial äußere Ende (141) der Versteifungsbewehrung (140) und das radial äußere Ende (151) der Entkopplungslage trennende Abstand (DC) kleiner als oder gleich 8 mm ist.

4. Anordnung nach einem der Ansprüche 1 bis 3, wobei das Verhältnis D2'/D1 größer als oder gleich 0,9 und kleiner als oder gleich 0,97 ist, wobei D2' den axialen Abstand zwischen dem axial am weitesten innen liegenden Punkt der ringförmigen Verstärkungsstruktur und der Mittelebene des Luftreifen bezeichnet, gemessen, wenn der Luftreifen im freien Zustand, nicht auf die Felge montiert und nicht aufgepumpt, und auf einem Boden derart abgestellt ist, dass seine Drehachse parallel zum Boden ist.

5. Anordnung nach einem der Ansprüche 1 bis 4, wobei der radial Abstand DRE größer als oder gleich 7% und kleiner als oder gleich 18% der radialen Höhe H des Luftreifens ist.

6. Anordnung nach einem der Ansprüche 1 bis 5, wobei der Abstand DAE zwischen dem radial am weitesten innen liegenden Punkt (71) der ringförmigen Verstärkungsstruktur (70) und dem radial äußeren Ende (142) der Versteifungsbewehrung (140) größer als oder gleich 25% und kleiner als oder gleich 35% der radialen Höhe H des Luftreifens ist.

7. Anordnung nach einem der Ansprüche 1 bis 6, wobei die Füllung (110) eine axiale Dicke E(r) hat, wobei diese Dicke der Länge der Schnittlinie der Füllung mit einer geraden Linie (200) parallel zur Drehachse (3) des Luftreifens entspricht und eine Schnittlinie mit der Füllung in einem radialen Abstand r vom radial am weitesten innen liegenden Punkt (71) der ringförmigen Verstärkungsstruktur (70) hat, wobei das Verhalten der Dicke E(r) so ist, dass im Bereich der Abstände r zwischen 0% und 10% der radialen Höhe H des Luftreifens die Schwankung der Dicke $\frac{\delta E(r)}{\delta r}$ niedriger als oder gleich -0,5 mm/mm über mindestens 3% der radialen Höhe H des Luftreifens ist.

8. Anordnung nach einem der Ansprüche 1 bis 6, wobei die Füllung (110) eine axiale Dicke E(r) hat, wobei diese axiale Dicke der Länge der Schnittlinie der Füllung mit einer geraden Linie (200) parallel zur Drehachse (3) des Luftreifens entspricht und eine Schnittlinie mit der Füllung in einem radialen Abstand r vom radial am weitesten innen liegenden Punkt (71) der ringförmigen Verstärkungsstruktur (70) hat, wobei das Verhalten der axialen Dicke E (r) so ist, dass im Bereich der Abstände r zwischen 0% und 10% der radialen Höhe H des Luftreifens die Schwankung der axialen Dicke $\frac{\partial E(r)}{\partial r}$ niedriger als oder gleich - 1 mm/mm über mindestens 1,5% der radialen Höhe H des Luftreifens ist.

9. Anordnung nach einem der Ansprüche 1 bis 8, wobei die Versteifungsbewehrung (140) aus einer Vielzahl von unterbrochenen Verstärkungselementen zusammengesetzt ist, wobei diese Verstärkungselemente gemäß einer Vielzahl von Kreisen (C, C1, C2) konzentrisch zur Drehachse des Luftreifens angeordnet sind.

10. Anordnung nach einem der Ansprüche 1 bis 9, wobei die Versteifungsbewehrung aus einer Vielzahl von unterbrochenen Verstärkungselementen (145, 146, 147) einer Länge L0 zusammengesetzt ist, wobei diese Verstärkungselemente gemäß einer Vielzahl von Kreisen (C, C1, C2) konzentrisch zur Drehachse (3) des auf seine Felge montierten Luftreifens angeordnet sind, wobei jeder Kreis von einem mittleren Radius (R, R1, R2) gemessen bezüglich der Drehachse definiert wird, wobei jedes unterbrochene Verstärkungselement (145) einer Länge L0, das sich auf einem Kreis C eines Radius R befindet, mechanisch über Kopplungslängen L11 bzw. L12 mit zwei unterbrochenen Verstärkungselementen (146, 147) gekoppelt ist, die sich auf einem Kreis C1 mit einem Radius R1 kleiner als der Radius R befinden, wobei der Kreis dem Kreis C direkt benachbart ist, wobei die Kopplungslängen L11 und L12, wobei L11 größer als oder gleich L12 genommen wird, die folgende Beziehung erfüllen: $1{,}5 \leq K \leq 4$ mit $K = (1-L12/L0)/(1-L11/L0)$.

11. Anordnung nach Anspruch 10, wobei:

(a) jedes unterbrochene Verstärkungselement (145) einer Länge L0, das sich auf einem Kreis C mit einem Radius R befindet, mechanisch über Kopplungslängen L11 und L12 mit zwei unterbrochenen Verstärkungselementen (146) gekoppelt ist, die sich auf einem Kreis C1 mit einem Radius R1 befinden, wobei der Kreis dem Kreis C direkt benachbart ist, wobei die Kopplungslänge L11 größer als oder gleich 55% von L0 und kleiner als oder gleich 75% von L0 ist, und die Kopplungslänge L12 größer als oder gleich 10% von L0 und kleiner oder gleich 30% von L0 ist;
(b) jedes unterbrochene Verstärkungselement (145) einer Länge L0, das sich auf einem Kreis C mit einem Radius R befindet, mechanisch über Kopplungslängen L21 und L22 mit zwei unterbrochenen Verstärkungselementen (147) gekoppelt ist, die sich auf einem Kreis C2 mit einem Radius R2 befinden, wobei der Kreis dem Kreis C1 direkt benachbart ist, wobei die Kopplungslänge L21 größer als oder gleich 20% von L0 und kleiner als oder gleich 40% von L0 ist, und die Kopplungslänge L22 größer als oder gleich 45% von L0 und kleiner als oder gleich 65% von L0 ist.

12. Anordnung nach Anspruch 11, wobei die Montagefelge (5) einen einen Felgensitz bildenden Bereich aufweist, der radial außen eine Ablaufrinne (6) mit im Wesentlichen kreisförmigem Profil aufweist, und wobei das radial äußere Ende der Versteifungsbewehrung sich auf einer Geraden J2 befindet, die durch die Mitte J des Profils der Ablaufrinne verläuft und einen Winkel $\alpha$ (alpha) bildet, der axial nach innen und radial nach außen offen ist, wobei der Winkel $\alpha$ (alpha) größer als oder gleich 90° und kleiner als oder gleich 120° ist.

13. Anordnung nach Anspruch 12, wobei der Winkel $\alpha$ (alpha) größer als oder gleich 100° und kleiner als oder gleich 115° ist.

## Claims

1. Assembly comprising a tyre (10) and a mounting rim (5), the tyre having an axis of rotation (3) and comprising:

two beads (20) intended to come into contact with the mounting rim, each bead comprising at least one annular reinforcing structure (70), each annular reinforcing structure having an axially innermost point, the two annular reinforcing structures (70) defining a median plane (130) of the tyre, perpendicular to the axis of rotation (3) of the tyre and situated equal distances from the annular reinforcing structures of each bead;
two sidewalls (30) extending the beads radially outwards, the two sidewalls meeting in a crown (25) comprising a crown reinforcement comprising two plies (80,90) each comprising reinforcing elements and being in contact with one another over at least part of the width of the crown, this part extending on each side of the median plane (130) of the tyre, between two contact ends (85), the crown reinforcement being surmounted by a tread (40) ;
at least one carcass reinforcement (60) extending from the beads through the sidewalls as far as the crown, the carcass reinforcement comprising a plurality of carcass reinforcing elements (61) and being anchored in the two beads by a turn-up around the annular reinforcing structure so as to form, within each bead, a main strand (62) and a turn-up (63), each turn-up extending radially outwards as far as an end (64) situated a radial distance DRE from the radially innermost point (71) of the annular reinforcing structure of the bead, the radial distance DRE being greater than or equal to 5% and less than or equal to 20% of the radial height H of the tyre;
in which each bead comprises a filler (110) formed of a rubber composition, the filler being situated, at least partially, radially on the outside of the annular reinforcing structure and at least partially between the main strand and the turn-up of the carcass reinforcement, the filler extending radially as far as a radial distance DBE from the radially innermost point of the annular reinforcing structure of the bead, the radial distance DBE being less than or equal to 10% of the radical height H of the tyre,

in which at least one sidewall of the tyre further comprises a stiffening reinforcement (140) having a radially inner end (141) and a radially outer end (142), the stiffening reinforcement being formed of a plurality of metallic reinforcing elements (145, 146, 147) oriented at an angle less than or equal to 10 degrees with respect to the circumferential direction, this stiffening reinforcement being positioned in such a way that the distance DAE between the radially innermost point (71) of the annular reinforcing structure and the radially outer end (142) of the stiffening reinforcement is greater than or equal to 20% and less than or equal to 40% of the radial height H of the tyre and that the distance DAI between the radially innermost point (71) of the annular reinforcing structure and the radially inner end (141) of the stiffening reinforcement is greater than or equal to 5% and less than or equal to 15% of the radial height H of the tyre, **characterized in that**

a portion (160) of rubber composition is positioned axially on the outside of the stiffening reinforcement, the thickness (E2) of this portion of rubber composition, measured perpendicular to the stiffening reinforcement, is greater than or equal to 1.2 mm at all points;

the ratio D2/D1 is greater than or equal to 1, where D1 denotes the axial distance between each contact end and the median plane (130) of the tyre and D2 is the axial distance between the axially innermost point of the annular reinforcing structure (70) and the median plane (130) of the tyre, the distances D1 and D2 being measured when the tyre is mounted on the mounting rim (5) and inflated to a service pressure;

the tyre further comprises an uncoupling ply (150) made of a rubber composition and positioned axially between the carcass reinforcement (60) and the stiffening reinforcement (140), the decoupling ply having a radially inner end (151) and a radially outer end (152), the decoupling ply having a thickness (E1) greater than or equal to 0.8 mm, this thickness being measured perpendicular to the stiffening reinforcement;

the radially inner end (141) of the stiffening reinforcement (140) is radially on the outside of the radially inner end (151) of the decoupling ply (150), the radial distance (DB) between these two ends being less than 10 mm, and h the radially outer end (142) of the stiffening reinforcement (140) is radially on the inside of the radially outer end (152) of the decoupling ply, the radial distance (DC) between these two ends being less than 10 mm.

2.  Assembly according to Claim 1, in which the distance (DB) separating the radially inner end (141) of the stiffening reinforcement (140) and the radially inner end (151) of the decoupling ply is less than or equal to 8 mm.

3.  Assembly according to Claim 1 or 2, in which the distance (DC) separating the radially outer end (141) of the stiffening reinforcement (140) and the radially outer end (151) of the decoupling ply is less than or equal to 8 mm.

4.  Assembly according to any one of Claims 1 to 3, in which the ratio D2'/D1 is greater than or equal to 0.9 and less than or equal to 0.97, where D2' denotes the axial distance between the axially innermost point of the annular reinforcing structure and the median plane of the tyre, measured when the tyre is in the free state, not mounted on a rim and not inflated, and placed on the ground in such a way that its axis of rotation is parallel to the ground.

5.  Assembly according to any one of Claims 1 to 4, in which the radial distance DRE is greater than or equal to 7% and less than or equal to 18% of the radial height H of the tyre.

6.  Assembly according to any one of Claims 1 to 5, in which the distance DAE between the radially innermost point (71) of the annular reinforcing structure (70) and the radially outer end (142) of the stiffening reinforcement (140) is greater than or equal to 25% and less than or equal to 35% of the radial height H of the tyre.

7.  Assembly according to any one of Claims 1 to 6, in which the filler (110) has an axial thickness E(r), this thickness corresponding to the length of the intersection of the filler with a straight line (200) parallel to the axis of rotation (3) of the tyre and having an intersection with the filler at a radial distance r from the radially innermost point (71) of the annular reinforcing structure (70), the trend of the thickness E(r) being such that, in the range of distances r comprised between 0% and 10% of the radial height H of the tyre, the variation in thickness $\dfrac{\partial E(r)}{\partial r}$ is less than or equal to -0.5 mm/mm over at least 3% of the radial height H of the tyre.

8.  Assembly according to any one of Claims 1 to 6, in which the filler (110) has an axial thickness E(r), this axial thickness corresponding to the length of the intersection of the filler with a straight line (200) parallel to the axis of rotation (3) of the tyre and having an intersection with the filler at a radial distance r from the radially innermost point (71) of the annular reinforcing structure (70), the trend of the axial thickness E(r) being such that, in the range of distances r comprised between 0% and 10% of the radial height H of the tyre, the variation in axial thickness $\dfrac{\partial E(r)}{\partial r}$ is less than or equal to -1 mm/mm over at least 1.5% of the radial height H of the tyre.

9. Assembly according to any one of Claims 1 to 8, in which the stiffening reinforcement (140) is made up of a plurality of discontinuous reinforcing elements, these reinforcing elements being positioned in a plurality of circles (C, C1, C2) concentric with the axis of rotation of the tyre.

10. Assembly according to any one of Claims 1 to 9, in which the stiffening reinforcement is made up of a plurality of discontinuous reinforcing elements (145, 146, 147) of length L0, these reinforcing elements being positioned in a plurality of circles (C, C1, C2) concentric with the axis of rotation (3) of the tyre mounted on its rim, each circle being defined by a mean radius (R, R1, R2) measured with respect to the said axis of rotation, each discontinuous reinforcing element (145) of length L0 situated on a circle C of radius R being mechanically coupled over coupling lengths L11 and L12 respectively to two discontinuous reinforcing elements (146, 147) situated on a circle C1 of radius R1 less than the radius R, the said circle being immediately adjacent to the circle C, in which the coupling lengths L11 and L12, L11 being taken as being greater than or equal to L12, satisfy the following relationship: 1.5 ≤ K ≤ 4 with K = (1-L12/L0)/(1-L11/L0).

11. Assembly according to Claim 10, in which:

    (a) each discontinuous reinforcing element (145) of length L0 situated on a circle C of radius R is mechanically coupled over coupling lengths L11 and L12 to two discontinuous reinforcing elements (146) situated on a circle C1 of radius R1, which circle is immediately adjacent to the circle C, the coupling length L11 being greater than or equal to 55% of L0 and less than or equal to 75% of L0 and the coupling length L12 being greater than or equal to 10% of L0 and less than or equal to 30% of L0;
    (b) each discontinuous reinforcing element (145) of length L0 situated on a circle C of radius R is mechanically coupled over coupling lengths L21 and L22 to two discontinuous reinforcing elements (147) situated on a circle C2 of radius R2, which circle is immediately adjacent to the circle C1, the coupling length L21 being greater than or equal to 20% of L0 and less than or equal to 40% of L0 and the coupling length L22 being greater than or equal to 45% of L0 and less than or equal to 65% of L0.

12. Assembly according to Claim 11, in which the said mounting rim (5) comprises a part forming a rim seat comprising, radially on the outside, a rim flange (6) of substantially circular profile, and in which the radially outer end of the stiffening reinforcement is situated on a straight line J2 passing through the centre J of the profile of the rim flange and making an angle $\alpha$ (alpha) open axially towards the inside and radially towards the outside, the angle $\alpha$ (alpha) being greater than or equal to 90° and less than or equal to 120°.

13. Assembly according to Claim 12, in which the angle $\alpha$ (alpha) is greater than or equal to 100° and less than or equal to 115°.

FIG. 1
(ART ANTERIEUR)

FIG. 2
(ART ANTERIEUR)

18

**FIG. 3**
**(ART ANTERIEUR)**

**FIG. 4**

**FIG. 5**
**(ART ANTERIEUR)**

62

63

20

50 200

E(r)

110

70

r

71

**FIG. 6**

140

E1

E2

62

50

150

160

**FIG. 7**

**FIG. 8**

**FIG. 9**

**FIG. 10**

**FIG. 11**

**EP 2 819 856 B1**

## RÉFÉRENCES CITÉES DANS LA DESCRIPTION

**Documents brevets cités dans la description**

- WO 2011067211 A
- US 6935394 B2
- WO 03103990 A1